# EUROPÄISCHE PATENTSCHRIFT

(11) **EP 1 561 052 B1**
(45) Veröffentlichungstag und Bekanntmachung des Hinweises auf die Patenterteilung: **19.04.2006**
(21) Anmeldenummer: 03789018.3
(22) Anmeldetag: 08.11.2003
(51) Int. Cl.: F16H 61/14, F16H 45/02

(54) **HYDRODYNAMISCHER ANTRIEB FÜR ARBEITSMASCHINEN**
HYDRODYNAMIC ACTUATING DEVICE FOR CONSTRUCTION MACHINES
MECANISME D'ENTRAINEMENT HYDRODYNAMIQUE POUR MACHINES

(30) Priorität: 16.11.2002 DE 10253493
(43) Veröffentlichungstag der Anmeldung: 10.08.2005
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2003/012478
(87) Internationale Veröffentlichungsnummer: WO 2004/046587

(56) Entgegenhaltungen:
- EP-A- 0 308 072
- EP-A- 0 512 726
- US-A- 5 400 884
- US-A- 5 947 242

## Beschreibung

Die vorliegende Erfindung betrifft einen hydrodynamischen Antrieb, mit einem Antriebsmotor, mit einem Drehmomentwandler und mit einem nachgeschalteten Getriebe, insbesondere für Arbeitsmaschinen mit hohem Fahranteil, wie Mobilkrane, wobei dem Drehmomentwandler eine Wandlerüberbrückungskupplung und eine primäre Kupplung zur Begrenzung der maximalen Zugkraft zugeordnet sind.

Hydrodynamische Antriebe, die aus einem Antriebsmotor, einem Drehmomentwandler und aus einem nachgeschalteten Getriebe bestehen, werden seit langem für eine Vielzahl verschiedenartiger Fahrzeuge eingesetzt, wobei im Fall von Arbeitsmaschinen das nachgeschaltete Getriebe meist als Reversierlastschaltgetriebe ausgebildet ist. In einem derartigen Getriebe ist jeweils eine Lastschaltkupplung für die Vorwärtsfahrt und für die Rückwärtsfahrt vorgesehen.

Ein Beispiel eines unter Last schaltbaren Wendegetriebes, das einen hydrodynamischen Drehmomentwandler, eine Eingangswelle und eine Ausgangswelle, einen Wendesatz und Schaltkupplungen aufweist, ist aus der DE A 198 46 955 der Anmelderin bekannt. Dabei handelt es sich um ein Wendegetriebe, das insbesondere für Flurförderfahrzeuge geeignet ist, das aber auch als Eingangsbaugruppe eines mehrgängigen Wendegetriebes eingesetzt werden kann, sodass es für andere Arbeitsmaschinen, wie Radlader, geeignet ist. Aus der US 5947242 A sind die Merkmale des Oberbegriffes des Auspruches 1 bekannt.

Lastschaltbare Wendegetriebe besitzen eine Reihe von Vorteilen. Sie bauen kompakt und sind komfortabel zu schalten. Ferner können die hydraulisch betätigbaren Schaltkupplungen durch Modulation des Schaltdrucks derart geschaltet werden, dass eine gesteuerte Lastübernahme gewährleistet wird. Bei bestimmten Arbeitsmaschinen, wie Gabelstaplern, sind neben dem Reversierbetrieb weitere Betriebszustände von Bedeutung, wie zum Beispiel das Anfahren, das Inchen und das Bremsen.

Für Arbeitsmaschinen mit hohem Fahranteil, wie zum Beispiel Mobilkrane, wird in den Drehmomentwandler eine Wandlerüberbrückungskupplung eingebaut und dem Drehmomentwandler ein Leitradfreilauf zugeordnet. Die Wandlerüberbrückungskupplung ist derart ausgelegt, dass sie bei geringen Zugkraftanforderungen, bei denen keine Drehmomentwandlung benötigt wird, geschlossen wird um dadurch den Wirkungsgrad des Antriebsstranges zu verbessern.

Mit den eingangs beschriebenen hydrodynamischen Antrieben kann die maximale Zugkraft nicht verändert, insbesondere nicht begrenzt werden, da die Zugkraft im Festbremspunkt, das heißt bei stehendem Abtrieb, nur von der Drehzahl des Antriebsmotors abhängt. Unter Volllast nimmt der Drehmomentwandler die maximale Leistung für den Fahrantrieb auf und wandelt davon einen erheblichen Teil im Öl in Wärme um. Damit die Hydraulikpumpe für den Arbeitsantrieb hohe Förderleistungen erbringen kann, muss der Antriebsmotor auf hohen Drehzahlen gehalten werden.

Um die Zugkraft eines derartigen hydrodynamischen Antriebs bei hoher Drehzahl des Antriebsmotors zu begrenzen, gibt es zwei Möglichkeiten. Die eine besteht darin, dem Drehmomentwandler eine sekundäre Kupplung nachzuschalten, zum Beispiel die Fahrtrichtungskupplung, oder aber eine primäre Kupplung zwischen Antriebsmotor und Drehmomentwandler ( Pumpenrad des Drehmomentwandlers ) vorzusehen.

Aus energetischen Gründen ist eine primäre Kupplung einer sekundären Kupplung vorzuziehen. Dabei ist zu berücksichtigen, dass eine sekundäre Kupplung ein um das Wandlungsverhältnis höheres Drehmoment übertragen muss, nicht jedoch eine primäre Kupplung.

Eine Rutschkupplung zur Zugkraftbegrenzung dient auch dazu, die vom Drehmomentwandler aufgenommene Leistung zu reduzieren. Bei Arbeitsmaschinen ist es häufig erforderlich, gleichzeitig den Fahrantrieb und eine vom Antriebsmotor abhängige Ölpumpe für die Arbeitshydraulik anzutreiben und dabei die Leistung dorthin zu leiten, wo sie gerade benötigt wird.

Von der Anmelderin werden sogenannte Ergopower-Getriebe mit Ergoinchfunktion hergestellt, die eine sekundäre Kupplung aufweisen, mit der die Zugkraft in einem geringen Maß mittels der rutschen Fahrtrichtungskupplung zu steuern ist.

Lastschaltkupplungen sind jedoch nicht in der Lage, größere Schaltleistungen, wie sie insbesondere für Radlader benötigt werden, über eine längere Zeit zu ertagen. Eine Zugkraftbegrenzungsfunktion ist daher ausgeschlossen.

Ein hydrodynamischer Antrieb mit einem Drehmomentwandler, in den eine primäre Kupplung und eine Wandlerüberbückungskupplung integriert sind, wurde von der Firma Caterpillar vorgeschlagen. Für deren Ansteuerung sind zwei voneinander unabhängige Steuerventile erforderlich. Die für ihre Ansteuerung nötige Steuerelektronik muss demzufolge zwei analoge Ausgänge aufweisen. In einen Drehmomentwandler integrierte Kupplungen sind außerdem mit dem Nachteil behaftet, dass der Wandlerinnendruck stark schwankt, nur mit Schwierigkeiten messbar ist und immer nur auf eine Seite des jeweiligen Schaltkolbens der primären Kupplung bzw. der Wandlerüberbrückungskupplung wirkt. Ferner ist der Wandlerinnendruck in hohem Maß abhängig von der Antriebsdrehzahl, der Temperatur und der Kennlinie des üblicherweise vorgesehenen Wandlersicherheitsventils.

Aufgabe der vorliegenden Erfindung ist es, einen hydrodynamischen Antrieb für eine Arbeitsmaschine mit hohem Fahranteil, insbesondere einen Radlader, zu schaffen, bei dem die Zugkraft bei hoher Drehzahl des Antriebsmotors auf einfache und zuverlässige Weise begrenzt werden kann.

Ausgehend von einem hydrodynamischen Antrieb mit einem Antriebsmotor, mit einem Drehmomentwandler und mit einem nachgeschalteten Getriebe der eingangs näher genannten Art erfolgt die Lösung dieser Aufgabe mit den im kennzeichnenden Teil des Anspruchs 1 angegebenen Merkmalen

Vorteilhafte Ausgestaltungen sind in den Unteransprüchen beschrieben.

Erfindungsgemäß ist also vorgesehen, dass die Wandlerüberbrückungskupplung und die primäre Kupplung in Reihe derart angeordnet sind, dass sie über ein einziges von der Getriebesteuerung ansteuerbares Ventil mit nur einem Steuerdruck schaltbar sind, und zwar derart, dass bei allen Fahrzuständen zuerst die primäre Kupplung und danach die Wandlerüberbrückungskupplung geschlossen wird.

Die nach der Erfindung vorgesehene Reihenschaltung der beiden Kupplungen wird erzielt durch entsprechende Bemessung der Kolbenrückstellfedern und/oder durch geeignete Auslegung der Kolbenflächen.

Besonders vorteilhaft ist es, wenn die beiden Kupplungen im Innenraum des nachgeschalten Getriebes angeordnet sind. Dadurch wird der Vorteil erzielt, dass ihre Ansteuerung völlig unabhängig von dem im Wandler herrschenden Innendruck ist. Dabei ist ohne weiteres möglich, die beiden Kupplungen entweder nebeneinander oder übereinander einzubauen.

Im folgenden wird die Erfindung anhand der Zeichnung näher erläutert, in der zwei vorteilhafte Ausführungsbeispiele dargestellt sind;
darin zeigen:
- Figur 1:: schematisch einen Schnitt durch ein erstes Beispiel eines hydrodynamischen Antriebs nach der Erfindung,
- Figur 2:: ein Diagramm zur Verdeutlichung der Reihenschaltung der beiden Kupplungen und
- Figur 3:: ein zweites Beispiel eines hydrodynamischen Antriebs nach der Erfindung.

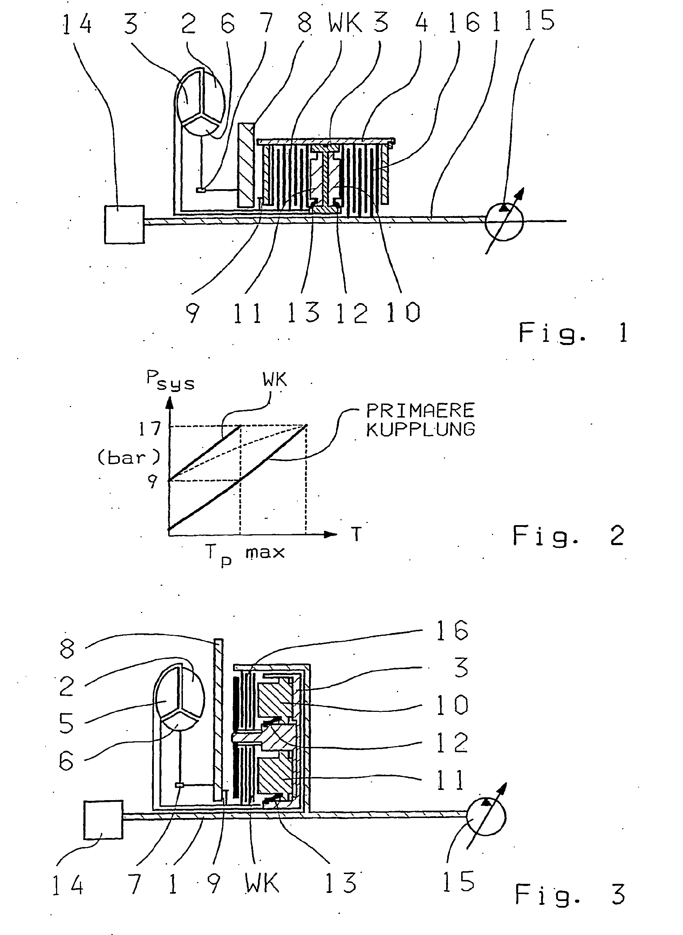

Bei dem in Figur 1 schematisch dargestellten hydrodynamischen Antrieb ist mit 14 der Antriebsmotor eines Kraftfahrzeuges bezeichnet, dem ein Drehmomentwandler nachgeordnet ist, dessen Pumpenrad mit 2, dessen Turbinenrad mit 5 und dessen Leitrad mit 6 bezeichnet sind, wobei dem Leitrad 6 ein Freilauf 7 zugeordnet ist.

Dem Drehmomentwandler ist ein Getriebe nachgeschaltet, dessen Gehäuse mit 8 und dessen Antriebswelle mit 1 bezeichnet sind. Dieses Getriebe ist vorteilhafterweise ein an und für sich bekanntes Reversierlastschaltgetriebe, das dem Fachmann gut bekannt ist und daher hier nicht im einzelnen beschrieben wird. Das Getriebe, das üblicherweise mit einer Lastschaltkupplung für die Vorwärtsfahrt bzw. die Rückwärtsfahrt versehen ist, findet seine bevorzugte Anwendung in Arbeitsmaschinen.

Um den hydrodynamischen Antrieb auch in Arbeitsmaschinen mit hohem Fahranteil einsetzen zu können, insbesondere in Mobilkranen, ist dem Drehmomentwandler eine Wandlerüberbrückungskupplung WK zugeordnet, die bei geringen Zugkraftanforderungen, bei denen eine Drehmomentwandlung nicht erforderlich ist, geschlossen ist um dadurch den Wirkungsgrad des Antriebsstranges zu verbessern.

Wird die Wandlerüberbrückungskupplung WK, wie bei den aus dem Stand der Technik bekannten hydrodynamischen Antrieben für Arbeitsmaschinen üblich, in den Drehmomentwandler eingebaut, so ist eine Begrenzung der maximalen Zugkraft auf einen Wert kleiner 100% nicht möglich. Im Festbremspunkt, das heißt bei stehendem Abtrieb, ist dabei die Zugkraft nur von der Antriebsmotordrehzahl abhängig. Bei Volllast wird die maximale Fahrantriebsleistung in den Drehmomentwandler gesteckt und im Öl in Wärme umgesetzt. Damit die Arbeitshydraulikpumpe 15 hohe Förderleistungen erbringen kann muss der Antriebsmotor 14 mit hoher Drehzahl laufen.

Um nun die Zugkraft bei hoher Motordrehzahl zu begrenzen ist eine primäre Kupplung 16 vorgesehen, die gemäss der Erfindung zusammen mit der Wandlerüberbrückungskupplung WK mit nur einem Steuerdruck geschaltet wird. In diesem Fall ist nur ein Steuerventil erforderlich und auch nur ein analoger Ausgang an der zugehörigen Steuerelektronik vorzusehen. Die Fahrzustände sind immer derart, dass zuerst die primäre Kupplung 16 und danach die Wandlerüberbrückungskupplung WK geschlossen wird.

Zu diesem Zweck werden der Kolben 10 der primären Kupplung 16 und der Kolben 11 der Wandlerüberbrückungskupplung WK derart ausgelegt, dass mit steigendem Steuerdruck P_{sys} zuerst die primäre Kupplung 16 Drehmoment überträgt, während die Wandlerüberbrückungskupplung WK noch offen ist. Bei weiter steigendem Steuerdruck schließt nach der primären Kupplung 16 dann auch die Wandlerüberbrückungskupplung WK und überträgt Drehmoment. Diese Reihenschaltung der beiden Kupplungen, die durch entsprechende Bemessung der Kolbenrückstellfeder 12 für den Kolben 10 der primären Kupplung 16 und der Kolbenrückstellfeder 13 für den Kolben 11 der Wandlerüberbrückungskupplung WK in Verbindung mit der jeweiligen Kolbenfläche erzielt wird, ist in Figur 2 durch die Funktion T = f(P) dargestellt. Im gewählten Beispiel wird nach dem Anlegen des Steuerdrucks P_{sys} zuerst die primäre Kupplung 16 und bei Erreichen eines höheren Steuerdrucks von hier 9 bar die Wandlerüberbrückungskupplung WK geschlossen.

Besonders vorteilhaft ist es, wenn, wie in den Figuren 1 und 3 dargestellt, die beiden Kupplungen in das Innere des nachgeschalteten Getriebes verlegt werden, da hierdurch ihre Ansteuerung unabhängig von dem im Wandler herrschenden Innendruck und dessen Veränderungen ist.

Bei dem in Figur 1 dargestellten Ausführungsbeispiel sind die primäre Kupplung 16 und die Wandlerüberbrückungskupplung WK nebeneinander im Inneren des Gehäuses 8 angeordnet. Dabei ist mit 3 der mit dem Pumpenrad 2 des Drehmomentwandlers verbundene Kolbenträger, mit 4 der mit dem Kolbenträger 3 verbundene Lamellenträger und mit 9 ein mit dem Turbinenrad 5 verbundenes Abtriebsrad bezeichnet, das einen weiteren Kraftfluss zum nachfolgenden Stufengetriebe ermöglicht.

In dem in Figur 3 dargestellten Ausführungsbeispiel, in dem gleiche Teile mit den gleichen Bezugszeichen versehen sind, sind die beiden Kupplungen nicht nebeneinander, sondern übereinander angeordnet.

Gemäss der Erfindung sind in der primären Kupplung 16 die Innenlamellen mit der Antriebswelle 1 und die Außenlamellen mit dem Pumpenrad 2 verbunden. Zwischen den beiden Kupplungskolben 10, 11 liegt die Druckölversorgung. Das Drucköl wird hierbei über eine nicht dargestellte zentrale Bohrung in der Antriebswelle 1 und über nicht dargestellte Kolbenringe zwischen Antriebswelle 1 und Pumpenradwelle dem Kolbenraum zugeführt.

### Bezugszeichen

- 1: Antriebswelle
- 2: Pumpenrad Drehmomentwandler
- 3: Kolbenträger
- 4: Lamellenträger
- 5: Turbinenrad
- 6: Leitrad
- 7: Freilauf
- 8: Gehäuse
- 9: Abtriebsrad
- 10: Kolben der primären Kupplung 16
- 11: Kolben der Wandlerüberbrückungskupplung WK
- 12: Rückstellfeder für Kolben der primären Kupplung 16
- 13: Rückstellfeder für Kolben der WK
- 14: Antriebsmotor
- 15: Pumpenantrieb für Arbeitshydraulik
- 16: Primäre Kupplung
- WK: Wandlerüberbrückungskupplung

## Patentansprüche

1. Hydrodynamischer Antrieb, mit einem Antriebsmotor, mit einem Drehmomentwandler und mit einem nachgeschalteten Getriebe, insbesondere für Arbeitsmaschinen mit hohem Fahranteil, wie Mobilkrane, wobei dem Drehmomentwandler eine Wandlerüberbrückungskupplung (WK) und eine primäre Kupplung (16) zur Begrenzung der maximalen Zugkraft zugeordnet sind, **dadurch gekennzeichnet, dass** die primäre Kupplung (16) und die Wandlerüberbrückungskupplung (WK) in Reihe derart angeordnet sind, dass sie über ein einziges von der Getriebesteuerung angesteuertes Ventil mit nur einem Steuerdruck derart schaltbar sind, dass bei allen Fahrzuständen zuerst die primäre Kupplung (16) und danach die Wandlerüberbrückungskupplung (WK) geschlossen wird.

2. Hydrodynamischer Antrieb nach Anspruch 1, **dadurch gekennzeichnet, dass** die Reihenschaltung der primären Kupplung (16) und der Wandlerüberbrückungskupplung (WK) durch entsprechende Bemessung der Kolbenrückstellfedern (12,13) und/oder durch entsprechende Auslegung der Kolbenflächen der Kolben (10,11) bewirkt wird.

3. Hydrodynamischer Antrieb nach Ansprüchen 1 und 2, **dadurch gekennzeichnet, dass** der Drehmomentwandler über einen Leitradfreilauf (7) mit dem nachgeschalteten Getriebe verbunden ist.

4. Hydrodynamischer Antrieb nach einem der vorhergehenden Ansprüche, **dadurch gekennzeichnet, dass** sowohl die primäre Kupplung (16) als auch die Wandlerüberbrückungskupplung (WK) im Inneren des nachgeschalteten Getriebes angeordnet sind.

5. Hydrodynamischer Antrieb nach Anspruch 4, **dadurch gekennzeichnet, dass** die primäre Kupplung (16) und die Wandlerüberbrückungskupplung (WK) nebeneinander angeordnet sind.

6. Hydrodynamischer Antrieb nach Anspruch 4, **dadurch gekennzeichnet, dass** die primäre Kupplung (16) und die Wandlerüberbrückungskupplung (WK) übereinander angeordnet sind.

7. Hydrodynamischer Antrieb nach einem der vorhergehenden Ansprüche, **dadurch gekennzeichnet, dass** die Innenlamellen der primären Kupplung (16) mit der Antriebswelle (1) und die Außenlamellen der primären Kupplung (16) mit dem Pumpenrad (2) des Drehmomentwandlers verbunden sind.

8. Hydrodynamischer Antrieb nach einem der vorhergehenden Ansprüche, **dadurch gekennzeichnet, dass** die Innenlamellen der Wandlerüberbrückungskupplung (WK) mit dem Turbinenrad (5) des Drehmomentwandlers und die Außenlamellen mit dem Pumpenrad (2) des Drehmomentwandlers verbunden sind.

## Claims

1. Hydrodynamic drive, with a drive motor, with a torque converter and with a downstream transmission, in particular for working machines with a high travelling portion, such as mobile cranes, wherein a converter lock-up clutch (WK) and a primary clutch (16) are associated with the torque converter to limit the maximum tractive force, **characterised in that** the primary clutch (16) and the converter lock-up clutch (WK) are disposed in series such that they can be shifted via a single valve, which is controlled by the transmission-shift control, with just one control pressure, such that firstly the primary clutch (16) and then the converter lock-up clutch (WK) is engaged in all driving states.

2. Hydrodynamic drive according to Claim 1, **characterised in that** the series connection of the primary clutch (16) and the converter lock-up clutch (WK) is effected by appropriately dimensioning the piston return springs (12, 13) and/or by an appropriate design of the piston areas of the pistons (10, 11).

3. Hydrodynamic drive according to Claims 1 and 2, **characterised in that** the torque converter is connected to the downstream transmission via a stator freewheel (7).

4. Hydrodynamic drive according to any one of the preceding Claims, **characterised in that** both the primary clutch (16) and the converter lock-up clutch (WK) are disposed in the interior of the downstream transmission.

5. Hydrodynamic drive according to Claim 4, **characterised in that** the primary clutch (16) and the converter lock-up clutch (WK) are disposed side-by-side.

6. Hydrodynamic drive according to Claim 4, **characterised in that** the primary clutch (16) and the converter lock-up clutch (WK) are disposed one above the other.

7. Hydrodynamic drive according to any one of the preceding Claims, **characterised in that** the inner discs of the primary clutch (16) are connected to the drive shaft (1) and the outer discs of the primary clutch (16) to the impeller (2) of the torque converter.

8. Hydrodynamic drive according to any one of the preceding Claims, **characterised in that** the inner discs of the converter lock-up clutch (WK) are connected to the turbine wheel (5) of the torque converter and the outer discs to the impeller (2) of the torque converter.

## Revendications

1. Entraînement hydrodynamique avec un moteur d'entraînement, avec un convertisseur de couple et avec une transmission branchée en aval, plus particulièrement pour des engins de chantier avec une partie de conduite importante, comme des grues mobiles, un embrayage à pontage de convertisseur (WK) et un embrayage primaire (16) étant associés au convertisseur de couple pour limiter la force de traction maximale, **caractérisé en ce que** l'embrayage primaire (16) et l'embrayage à pontage de convertisseur (WK) sont disposés en série de telle sorte qu'ils puissent être enclenchés par l'intermédiaire d'une soupape de contrôle contrôlée par le contrôle de la transmission avec une seule pression de contrôle et **en ce que** dans tous les états de marche, l'embrayage primaire (16) et ensuite l'embrayage à pontage de convertisseur (WK) sont fermés.

2. Entraînement hydrodynamique selon la revendication 1, **caractérisé en ce que** le branchement en série de l'embrayage primaire (16) et de l'embrayage à pontage de convertisseur (WK) est obtenu grâce à un dimensionnement correspondant des ressorts de rappel des pistons (12, 13) et/ou grâce à une conception correspondante des surfaces des pistons (10, 11).

3. Entraînement hydrodynamique selon les revendications 1 et 2, **caractérisé en ce que** le convertisseur de couple est relié à la transmission branchée en aval par l'intermédiaire de la roue libre de roue guidage (7).

4. Entraînement hydrodynamique selon l'une des revendications précédentes, **caractérisé en ce que** l'embrayage primaire (16) ainsi que l'embrayage à pontage de convertisseur (WK) sont disposés à l'intérieur de la transmission branchée en aval.

5. Entraînement hydrodynamique selon la revendication 4, **caractérisé en ce que** l'embrayage primaire (16) et l'embrayage à pontage de convertisseur (WK) sont disposés côte à côte.

6. Entraînement hydrodynamique selon la revendication 4, **caractérisé en ce que** l'embrayage primaire (16) et l'embrayage à pontage de convertisseur (WK) sont disposés l'un sur l'autre.

7. Entraînement hydrodynamique selon l'une des revendications précédentes, **caractérisé en ce que** les disques internes de l'embrayage primaire (16) sont reliés à l'arbre d'entrée (1) et les disques externes de l'embrayage primaire (16) sont reliés à la roue de pompage (2) du convertisseur de couple.

8. Entraînement hydrodynamique selon l'une des revendications précédentes, **caractérisé en ce que** les disques internes de l'embrayage à pontage de convertisseur (WK) sont reliés à la roue de turbine (5) du convertisseur de couple et les disques externes de l'embrayage à pontage de convertisseur (WK) sont reliés à la roue de pompage (2) du convertisseur de couple.
